# EUROPÄISCHE PATENTSCHRIFT

(11) **EP 1 092 168 B1**
(45) Veröffentlichungstag und Bekanntmachung des Hinweises auf die Patenterteilung: **09.09.2009**
(21) Anmeldenummer: 99944239.5
(22) Anmeldetag: 01.07.1999
(51) Int. Cl.: G02B 6/38

(54) **FERRULE FÜR EINE OPTISCHE STECKVERBINDUNG**
FERRULE FOR AN OPTICAL PLUG-IN CONNECTION
FERULE POUR RACCORD OPTIQUE ENFICHABLE

(30) Priorität: 02.07.1998 DE 19829630
(43) Veröffentlichungstag der Anmeldung: 18.04.2001
(73) Patentinhaber: TYCO Electronics Logistics AG, 9323 Steinach / SG (CH)
(72) Erfinder: SANDER, Reinhard, D-67454 Hassloch (DE); SCHMIDT, Helge, D-67346 Speyer (DE)
(74) Vertreter: Hirsch, Peter
(86) Internationale Anmeldenummer: PCT/DE1999/001959
(87) Internationale Veröffentlichungsnummer: WO 2000/002070

(56) Entgegenhaltungen:
- EP-A- 0 530 744
- EP-A- 0 859 253
- WO-A-94/28449
- WO-A-97/34179
- FR-A- 2 268 370
- JP-A- 05 060 949
- US-A- 4 225 213
- US-A- 5 620 634
- PATENT ABSTRACTS OF JAPAN vol. 1995, no. 10, 30. November 1995 (1995-11-30) & JP 07 191232 A (FURUKAWA ELECTRIC CO LTD:THE), 28. Juli 1995 (1995-07-28)

## Beschreibung

Die Erfindung betrifft eine Ferrule insbesondere zur Verwendung in einer Steckverbindung für wenigstens zwei miteinander zu verbindende optische Mehrfachfasern, die jeweils wenigstens zwei Lichtwellenleiter aufweisen.

Die gattungsgemäßen Ferrulen werden auch als optische Mehrfachstecker bezeichnet. Diese optischen Mehrfachstecker werden dazu verwendet, um optische Mehrfachfasern zu verbinden. Optische Mehrfachfasern weisen mehrere Lichtwellenleiter auf, die mit einzelnen Lichtwellenleitern einer weiteren optischen Mehrfachfaser verbunden werden können. Dazu werden die einzelnen Lichtwellenleiter am Ende jeder optischen Mehrfachfaser aufgespleißt und in je einer Ferrule aufgenommen. Die Ferrulen sind dabei so beschaffen, daß die einzelnen Lichtwellenleiter einer optischen Mehrfachfaser in einer definierten Richtung und an einer definierten Position bereitgehalten werden. Dementsprechend können durch Aneinanderfügen der Stirnseiten von zwei Ferrulen die einzelnen Lichtwellenleiter der in den beiden Ferrulen angeordneten optischen Mehrfachfasern so gegenübergestellt werden, daß die Lichtwellen je eines Lichtwellenleiters der ersten optischen Mehrfachfaser in je einen zugeordneten Lichtwellenleiter der zweiten optischen Mehrfachfaser eingespeist werden. Solche Ferrulen, auch für merhere Melesfach fusern, sind z.Bsp. aus der US 5620634, der JP 05060949, der EP 0530744, der WO 97/34179, oder der US 4225 213 bekannt. Bei den bekannten optischen Mehrfachsteckern ist problematisch, daß die Übertragungsperformance zwischen zwei durch optische Mehrfachfasern miteinander verbundenen Geräten begrenzt ist. Darüber hinaus können sich bei der Übertragung von Information zwischen zwei solchen Geräten Übertragungsfehler ergeben, die auf die Steckverbindung zwischen zwei optischen Mehrfachfasern zurückgeführt werden.

Es ist daher Aufgabe der Erfindung, eine gattungsgemäße Ferrule bzw. einen gattungsgemäßen optischen Mehrfachstecker bereitzustellen, der eine Übertragung von Informationen mit hoher Performance und mit hoher Zuverlässigkeit gestattet.

Diese Aufgabe wird durch den Gegenstand des unabhängigen Anspruchs gelöst. Vorteilhafte Weiterbildungen ergeben sich aus den jeweiligen Unteransprüchen.

Gemäß der Erfindung weist die Ferrule ein Steckergehäuse auf, das in einer Einsteckrichtung in einen Ferrulencontainer einsteckbar ist und/oder das mit einem weiteren Steckergehäuse zusammensteckbar ist, wobei das erfindungsgemäße Steckergehäuse wenigstens zwei Aufnahmebereiche zur Aufnahme je eines Mehrfach-Lichtwellenleiters aufweist.

Durch die Ausbildung der erfindungsgemäßen Ferrule mit wenigstens zwei Aufnahmebereichen für Mehrfachfasern ist gewährleistet, daß gegenüber bekannten Ferrulen wesentlich mehr Einzel-Lichtwellenleiter in der Ferrule aufgenommen werden können. Dadurch erhöht sich die Übertragungsgeschwindigkeit von Informationen zwischen Geräten, die über optische Mehrfachfasern miteinander verbunden sind.

Die erfindungsgemäß vorgesehenen Aufnahmebereiche sind in Einsteckrichtung gesehen übereinander angeordnet, wobei die Aufnahmebereiche auch in einer Richtung quer zur Einsteckrichtung bezüglich einer Symmetrielinie des Steckergehäuses zueinander versetzt angeordnet sind. Dadurch ergibt sich eine besonders hohe Lichtwellenleiterdichte an einer Stirnseite der erfindungsgemäßen Ferrule.

Gerade zur Verbidung zweier Steckergehäuse miteinander sind in Einsteckrichtung verlaufende Führungsbohrungen vorgesehen , in denen Führungsstifte vorgesehen sein können. Diese Führungsbohrungen sind in einer Richtung quer zur Einsteckrichtung bezüglich einer Symmetrielinie des Steckergehäuses auch zueinander versetzt angeordnet sein, was sich gerade dann als vorteilhaft herausstellt, wenn wenigstens zwei Aufnahmebereiche in einer Richtung quer zur Einsteckrichtung zueinander versetzt angeordnet sind.

Für das erfindungsgemäße Steckergehäuse kann thermoplastischer Kunststoff verwendet werden, dem Füllstoffpartikel beigemengt sind. Ein solcher thermoplastischer Kunststoff wird auch als Matrix bezeichnet, wobei die Füllstoffe vorgesehen sind, um die Menge der benötigten Matrix zu vermindern.

Es können Füllstoffpartikel vorgesehen sein, die eine Längserstreckungsrichtung aufweisen, die wenigstens teilweise quer bzw. wenigstens teilweise parallel zu einer Einsteckrichtung der Ferrule verlaufen können. Dadurch ergibt sich eine erfindungsgemäße Ferrule mit besonders vorteilhaften thermischen Eigenschaften.

Eine solche Ferrule kann an wenigstens einer Seite des Stekkergehäuses einen Gußmassen-Eintrittsbereich aufweisen, wobei an einer dem Gußmassen-Eintrittsbereich gegenüberliegenden Seite des Steckergehäuses ein Gußmassen-Austrittsbereich vorgesehen sein kann. Eine Verbindungslinie zwischen dem Guß- . - massen-Eintrittsbereich und dem Gußmassen-Austrittsbereich verläuft dann parallel zur Erstreckungsrichtung von in einer Umgebung des Aufnahmebereichs vorgesehenen länglichen Füllstoffpartikeln.

Abweichend davon oder zusätzlich dazu kann das Steckergehäuse an wenigstens einer Seite einen Gußmassen-Eintrittsbereich aufweisen, wobei im Steckergehäuse zwischen wenigstens einer dem Gußmassen-Eintrittsbereich gegenüberliegenden Seite des Steckergehäuses und dem Gußmassen-Eintrittsbereich selbst ein Fließsperren-Einschnitt vorgesehen ist. Der Fließsperren-Einschnitt ist dabei als Verengung des Steckergehäuses in einer Richtung quer zur Einsteckrichtung ausgebildet. Eine Verbindungslinie zwischen dem Gußmassen-Eintrittsbereich und dem Fließsperren-Einschnitt verläuft dabei parallel zur Erstrekkungsrichtung von in einer Umgebung des Aufnahmebereichs vorgesehenen länglichen Füllstoffpartikeln.

Die Erfindung beruht auf der Erkenntnis, daß sich besonders gute thermische Eigenschaften und damit eine besonders hohe Übertragungsqualität dann erzielen läßt, wenn in einer Umgebung des Aufnahmebereichs längliche Füllstoffpartikel vorgesehen sind, die sowohl zueinander parallel verlaufen als auch vorzugsweise quer zur Verbindungslinie von V-Nuten in einem Aufnahmebereich der Ferrule.

Der Aufnahmebereich kann in Einsteckrichtung verlaufende Lichtwellenleiter-Nuten aufweisen und so ausgebildet sein, daß er mit einem Deckel verschließbar ist. Dann ergibt sich eine besonders einfache Montage der erfindungsgemäßen Ferrule. Dabei ist es besonders vorteilhaft, wenn der Aufnahmebereich eine Schwalbenschwanzführung zur Fixierung des Deckels aufweist.

Es ist von Bedeutung, daß sich gerade ein Steckergehäuse mit wenigstens zwei Aufnahmebereichen zur Aufnahme je eines Mehrfach-Lichtwellenleiters besonders zuverlässig bereitstellen läßt, wenn das Steckergehäuse aus thermoplastischem Kunststoff gefertigt ist, dem längliche Füllstoffpartikel beigemengt sind, deren Längserstreckungsrichtung wenigstens teilweise quer bzw. parallel zur Einsteckrichtung verläuft. Abweichend davon kann das Steckergehäuse auch aus duroplastischem Kunststoff gefertigt werden, wenn die übrigen Merkmale beibehalten werden.

Die erfindungsgemäßen optischen Mehrfachstecker werden insbesondere auch aus einem mit spärischen Quarzkugeln hochgefüllten Thermoplast oder Duroplast hergestellt. Der erfindungsgemäße, aus thermoplastischem Kunststoff hergestellte optisches Mehrfachsterker funktioniert auch über den gesamten Betriebstemperaturbereich im Zusammenspiel mit einem duroplastischen optischen Mehrfachstecker, und zwar auch bei unterschiedlichen Temperaturen der beiden Steckpartner.

Einer der Grundgedanken der vorliegenden Erfindung beruht auf der Erkenntnis, daß die mit den bekannten Ferrulen verbundenen Probleme verfahrenstechnisch und durch die Auswahl geeigneter thermoplastischer Kunststoffe und geeigneter Füllstoffe lösbar sind.

Der thermoplastische Kunststoff der erfindungsgemäßen. Ferrule kann wenigstens ein teilkristallines Thermoplast aufweisen. So sind insbesondere LCP, PPS oder PEEK vorgesehen.

Außerdem kann ein als Verstärkungsstoff ausgebildeter Füllstoff vorgesehen sein, wie beispielsweise Glas-, Kohle-, Aramid- und/oder Stahlfasern. Dabei sind die Fasern des Verstärkungsstoffs so ausgebildet, daß sie ein vorbestimmtes Durchmesser-Längen-Verhältnis aufweisen. So können Fasern vorgesehen sein, die bei einem Durchmesser von ca. 10 µm bis ca. 20 µm eine Länge von ca. 300 µm aufweisen.

Darüber hinaus können auch Füllstoffe vorgesehen sein, die als sphärische Mineralfüllstoffe ausgebildet sind. Solche Mineralfüllstoffe können einen Durchmesser von ca. 2 µm bis ca. 8 µm aufweisen. Dann verbessern diese das Schwindungsverhalten bei der Herstellung der erfindungsgemäßen Ferrule, was sich besonders günstig auf deren Maßhaltigkeit insbesondere im gesamten Arbeitstemperaturbereich auswirkt. Gemäß der Erfindung kann die Beimengung von Glasfasern und mineralischen Füllstoffen im Gewichtsverhältnis von ca. 2:3 erfolgen, wobei eine maximale Füllung des Grundstoffs zur Herstellung der erfindungsgemäßen Ferrule angestrebt werden kann.

Gemäß der Erfindung läßt sich ein bestimmter Ausdehnungskoeffizient der erfindungsgemäßen Ferrule auch durch die Orientierung der Kunststoffschmelze in einer zur Herstellung der Ferrule verwendeten Spritzgießform beeinflussen. Wenn bei der Aushärtung der Kunststoffschmelze entstehende Kunststoff-Makromoleküle und Füllstoffe wie insbesondere Glasfasern ausgerichtet werden, dann wird gemäß einer der Erfindung zugrundeliegenden Erkenntnis in der Richtung der Glasfasern und Kunststoff-Makromoleküle ein geringerer Wärmeausdehnungskoeffizient verzeichnet als in einer dazu senkrechten Richtung. Entscheidend für die Funktionsfähigkeit der erfindungsgemäßen Ferrule ist ein Bereich zwischen zylindrischen Öffnungen für Zentrierstifte, der auch als Aufnahmebereich für die Lichtwellenleiter bezeichnet wird, da es hier auf die höchste Positionsgenauigkeit ankommt. Die Orientierung der Kunststoff-Makromoleküle und der Füllstoffe in diesem Bereich kann durch die Form und Position eines Angusses einer Spritzgußform sowie durch eine Gestaltung eines sogenannten Formnestes erreicht werden. Ein Filmanguß mindestens über die Länge einer maßgeblichen Mikrostruktur wie einem Aufnahmenbereich für Lichtwellenleiter oder auch über die gesamte Bauteillänge mit einem geringen Angußquerschnitt und eine mittige Angußposition an einer Seitenfläche bewirkt ein Einströmen von Kunststoffschmelze in einer zu einer Seitenfläche parallelen Front, die Scherung der Kunststoffschmelze und eine Freistrahlbildung. Durch diese Maßnahmen wird die Kunststoffschmelze schon beim Einspritzen in Linie der Lichtwellenleiterfaseranordnung d.h. insbesondere senkrecht zu den Lichtwellenleitern im Aufnahmebereich orientiert. Um die Orientierung im relevanten Bereich um den Aufnahmebereich herum zu verbessern, wird die Kunststoffschmelze bis kurz vor dem Erkalten in Einspritzrichtung bewegt. Bei der Verwendung einer sogenannten "verlorenen Form" gegenüberliegend des Angußbereiches oder durch Vorsehen von Fließbremsen im Gußwerkzeug hinter dem Aufnahmebereich kann dann ein ausrichtender Effekt erreicht werden. Vorzugsweise ist das Gußvolumen hinter der Fließbremse oder der "verlorenen Form" gleich oder größer dem Bereich der Gußform, der den relevanten Bereich der plastischen Seele bildet.

Mit einer erfindungsgemäßen Ferrule wird ein Verbindungsstekker aus einem kostengünstigen Thermoplast bereitgestellt, der sich durch geringe Materialkosten und geringe Werkzeugkosten auszeichnet. Außerdem lassen sich kurze Zykluszeiten erreichen, wobei bei einer geeigneten Werkstoffwahl eine geringe Bruchempfindlichkeit und dadurch eine höhere Anzahl von Steckzyklen der erfindungsgemäßen Ferrule erreicht werden kann.

Gemäß der Erfindung sind folgende Füll- und Verstärkungsstoffbeispiele möglich: LCP +50%, PPS +65%, PEEK +50% Füllund Verstärkungsstoffe.

Mit der erfindungsgemäßen Ferrule, die wenigstens zwei oder mehrere Aufnahmebereiche zur Aufnahme je eines Mehrfach-Lichtwellenleiters aufweist, können bei einer Stirnfläche der Ferrule von 16 mm² insgesamt 12 Einzel-Lichtwellenleiter in einem Raster von 0,25 mm untergebracht werden. Bei der Verwendung von zwei Aufnahmebereichen können demnach bis zu 32 Einzel-Lichtwellenleiter untergebracht werden. Die Außenkontur, die Kontaktfläche und gegebenenfalls die Führungselemente sind im Vergleich zum sogenannten MT-Standard gleichbleibend. Die Kodierung der Einsteckrichtung der erfindungsgemäßen Ferrule kann mit Hilfe von Fasen oder mittels unterschiedlicher Durchmesser von Führungsstiften realisiert werden.

Abweichend davon können auch 24-polige MT-Stecker bzw. MT-Ferrulen bereitgestellt werden.

Die Erfindung ist in der Zeichnung anhand mehrerer Ausführungsbeispiele veranschaulicht.
Figur 1 zeigt eine perspektivische Darstellung einer Ferrule in einem Herstellungsschritt unmittelbar nach dem Ausformen aus einer Gußform,
Figur 2 zeigt einen Querschnitt durch die Ferrule aus Figur
Figur 3 zeigt eine perspektivische Darstellung einer weiteren Ferrule in einem Herstellungsschritt nach dem Ausformen aus einer weiteren Gußform,
Figur 4 zeigt einen Querschnitt durch die Ferrule aus Figur 3,
Figur 5 zeigt eine perspektivische Darstellung einer weiteren Ferrule in einem Zustand während der Montage eines Mehrfach-Lichtwellenleiters und
Figur 6 zeigt eine perspektivische Darstellung einer erfindungsgemäßen Ferrule in einem Zustand während der Montage eines Mehrfach-Lichtwellenleiters.

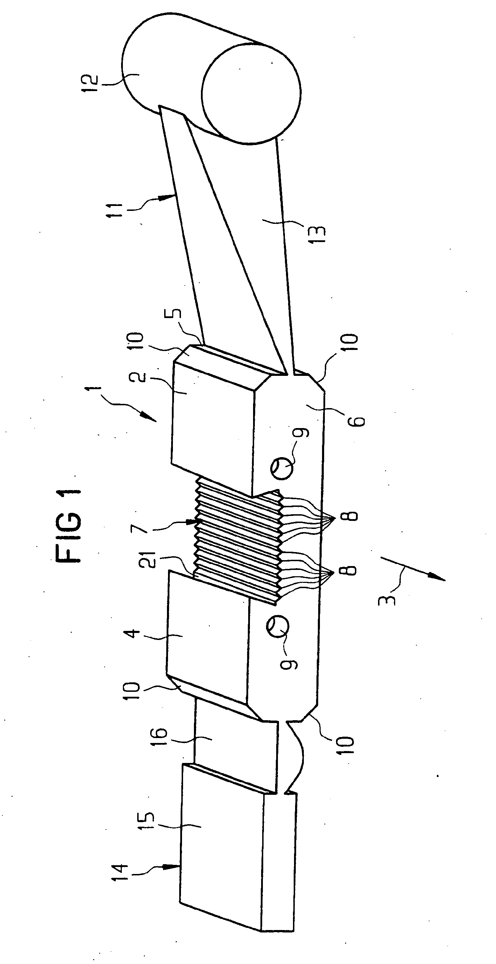

Figur 1 zeigt eine perspektivische Ansicht einer Ferrule 1 in einem Vorstadium ihrer Fertigstellung. Von der Ferrule 1 ist in dieser Ansicht nur ein Steckergehäuse 2 zu sehen, das aus thermoplastischem Kunststoff gefertigt ist.

Die Ferrule 1 ist dafür bestimmt, in einer Einsteckrichtung 3 in einen in dieser Ansicht nicht gezeigten Stecker mit einem Steckgesicht eingesteckt zu werden.

Das Steckergehäuse 2 hat quer zur Einsteckrichtung 3 einen im wesentlichen rechteckigen Querschnitt. Das Steckergehäuse 2 wird von einer unteren Längsfläche, von der in dieser Ansicht nur eine Vorderkante zu sehen ist, von einer oberen Längsfläche 4 sowie von einer rechten Seitenfläche 5 und von einer linken Seitenfläche begrenzt, die in dieser Ansicht ebenfalls nicht zu sehen ist.

Nach vorne hin wird das Steckergehäuse 2 von einer Kontaktfläche 6 begrenzt, während auf der Rückseite des Steckergehäuses 2 eine Anschlußfläche vorgesehen ist, die in dieser Ansicht nicht zu sehen ist.

An der Oberseite des Steckergehäuses 2 ist in der oberen Längsfläche 4 ein Aufnahmebereich 7 ausgebildet, der zwölf parallel zur Einsteckrichtung 3 verlaufende V-Nuten 8 aufweist. Die V-Nuten 8 sind zur Aufnahme von in dieser Ansicht nicht gezeigten Lichtwellenleitern einer optischen Mehrfachfaser bestimmt. Dabei wird in jede V-Nut 8 genau ein einzelner Lichtwellenleiter eingelegt. Der Aufnahmebereich 7 schließt bündig mit der Kontaktfläche 6 ab. Ebenso schließt auf der anderen Seite des Steckergehäuses 2, nämlich auf der in dieser Ansicht nicht sichtbaren Anschlußfläche, der Aufnahmebereich 7 bündig mit der Anschlußfläche ab.

Weiterhin sind im Steckergehäuse 2 in einem Bereich links und rechts des Aufnahmebereichs 7 jeweils eine Führungsbohrung 9 vorgesehen, die sich parallel zur Einsteckrichtung 3 durch das gesamte Steckergehäuse 2 hindurch erstrecken können und die auf der Kontaktfläche 6 und auf der in dieser Ansicht nicht sichtbaren Anschlußfläche austreten können. In den Führungsbohrungen 9 sind in dieser Ansicht nicht gezeigte Führungsstifte vorgesehen, die vom Steckergehäuse 2 aus über die Kontaktfläche 6 abstehen.

Am äußeren Umfang im Bereich je einer imaginären Verbindungskante zwischen der oberen Längsfläche 4, der rechten Seitenfläche 5, der linken Seitenfläche und der unteren Längsfläche weist das Steckergehäuse 2 Führungs- und Kodierungsfasen 10 auf, die als Abtragung des Steckergehäuses 2 im Bereich einer dieser imaginaren Verbindungskanten ausgeformt sind.

Wie man in dieser Ansicht besonders gut sieht, ist das Stekkergehäuse 2 mit einem Gußverfahren hergestellt, wobei die in Figur 1 gezeigte Darstellung die Ferrule 1 nach dem Herausnehmen aus einer in dieser Ansicht nicht gezeigten Spritzgußform zeigt. Dementsprechend sind in dieser Ansicht noch an dem Steckergehäuse 2 vorgesehene Strang- und Steigerbereiche vorhanden. So weist die rechte Seitenfläche 5 einen Strangbereich 11 auf, der sich in einen Angußkanalbereich 12 sowie in einen sich zwischen dem Angußbereich 12 und der rechten Seitenfläche 5 erstreckenden Fächerangußbereich 13 gliedert.

Von der linken Seitenfläche aus, die in dieser Ansicht nicht gezeigt ist, erstreckt sich ein Steigerbereich 14, der sich in einen Bereich einer "verlorenen Form" 15 sowie in einen sich zwischen dem Bereich der "verlorenen Form" 15 und der linken Seitenfläche erstreckenden Überlaufsteg 16 gliedert.

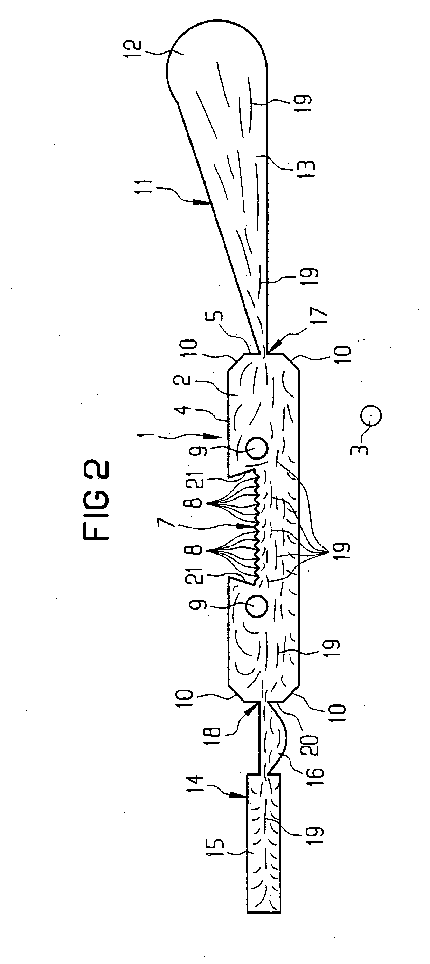

Figur 2 zeigt das Steckergehäuse 2 aus Figur 1 zusammen mit dem Strangbereich 11 und dem Steigerbereich 14 im Querschnitt. Wie man in dieser Ansicht besonders gut sieht, sind in dem thermoplastischen Material zur Herstellung des Stekkergehäuses 2 längliche Verstärkungsfasern 19 angeordnet, deren Haupterstreckungsrichtung durch "Striche" und "Bögen" angeordnet ist. Dabei geben die Striche im Inneren der Umrisse des Steckergehäuses 2, des Strangbereichs 11 und des Steigebereichs 14 auch den lokalen Verlauf der Strömung der Kunststoffmasse kurz vor dem Erstarren wieder.

Wie man in Figur 2 deutlich sieht, richten sich durch die besondere Gestaltung einer in dieser Ansicht nicht gezeigten Spritzgußform, die einen Gußmassen-Eintrittsbereich 17 sowie einen Gußmassen-Austrittsbereich 18 aufweist, Füllstoffpartikel und Verstärkungsfasern 19 in einer Richtung zwischen dem Gußmassen-Eintrittsbereich 17 und dem Gußmassen-Austrittsbereich 18 aus. Dabei ist in dem Steckergehäuse 2 eine Ausrichtung der Verstärkungsfasern 19 gerade in dem Bereich unterhalb des Aufnahmebereichs 7 mit den V-Nuten 8 und zwischen den beiden Führungsbohrungen 9 vorgesehen.

In Figur 2 sind nur einige Verstärkungsfasern 19 mit Bezugsziffern bezeichnet. Der besseren Übersicht halber sind Bezugsziffern für die Mehrzahl der in Figur 2 dargestellten Verstärkungsfasern 19 weggelassen.

Bei der Herstellung und Fertigstellung einer Ferrule 1 wird wie folgt vorgegangen.

In einem ersten Herstellungsschritt wird das Steckergehäuse 2 unter Einsatz einer in dieser Ansicht nicht gezeigten Spritzgußtechnik hergestellt. Hierzu ist eine Spritzgußform vorgesehen, die im Bereich der Gußmassen-Eintrittsbereiche 17 und der Gußmassen-Austrittsbereiche 18 Öffnungen aufweist. Nach dem Füllen der Spritzgußform nach dem Spritzgießen mit thermoplastischem Kunststoff entsteht ein Steckergehäuse 2, wie es in Figur 1 und Figur 2 gezeigt ist.

Nach dem Ausformen des Steckergehäuses 2 werden der Strangbereich 11 und der Steigerbereich 14 vom Steckergehäuse 2 abgetrennt.

Danach werden Lichtwellenleiter in den Aufnahmebereich 7 eingesetzt. Der Aufnahmebereich 7 wird mit einem in dieser Ansicht nicht gezeigten Deckel verschlossen, der in Schwalbenschwanzführungen 21 des Aufnahmebereichs 7 einrastet. Danach werden über die Kontaktfläche 6 hinausstehende Enden der im Aufnahmebereich 7 aufgenommenen Lichtwellenleiter abgebrochen und die Kontaktfläche 6 mit den abgebrochenen Enden der Lichtwellenleiter poliert.

Durch die Orientierung der Füllstoffe 19 im Bereich um die V-Nuten 8 des Aufnahmebereichs 7 herum und im Bereich zwischen den Führungsbohrungen 9 werden besonders gute thermische Eigenschaften des Steckergehäuses 2 erreicht. Dabei erstrecken sich die Verstärkungsfasern 19 parallel zu einer Verbindungslinie der V-Nuten 8 bzw. zu einer Verbindungslinie zwischen den Führungsbohrungen 9.

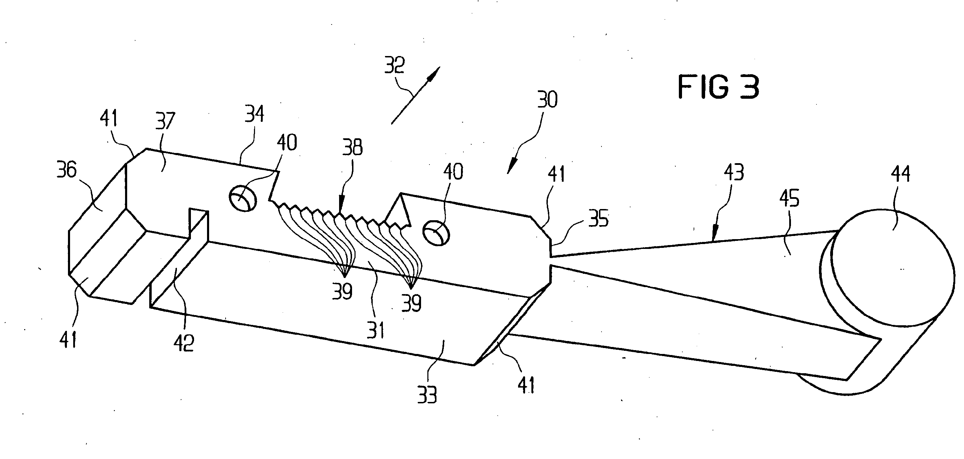

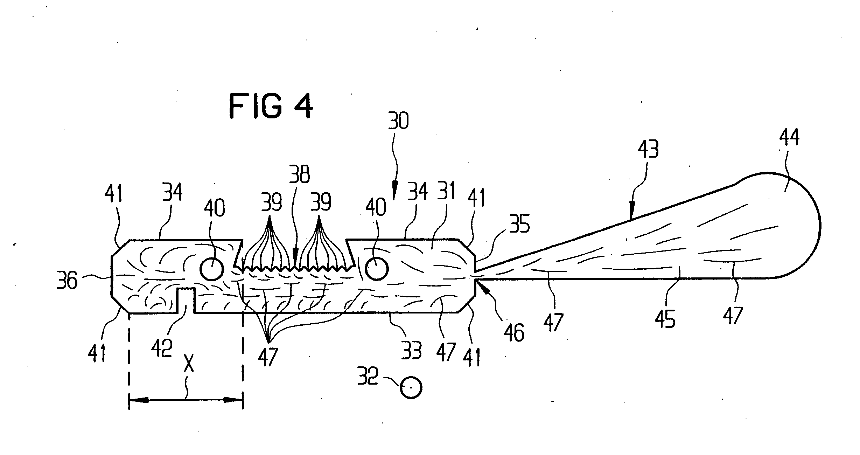

Figur 3 und Figur 4 zeigen eine weitere Ferrule 30, von der nur ein Steckergehäuse 31 zu sehen ist. Figur 3 zeigt dabei eine perspektivische Ansicht des Steckergehäuses 31 von unten und Figur 4 zeigt einen Querschnitt durch das Steckergehäuse 31.

Die Ferrule 30 ist dafür bestimmt, in einer Einsteckrichtung 32 in einen in dieser Ansicht nicht gezeigten Stecker mit einem Steckgesicht eingesteckt zu werden.

Das Steckergehäuse 31 ist aus einem thermoplastischen Kunststoff hergestellt und hat quer zur Einsteckrichtung 32 einen im wesentlichen rechteckigen Querschnitt. Das Steckergehäuse 31 wird von einer unteren Längsfläche 33, von einer oberen Längsfläche 34, von einer rechten Seitenfläche 35 und von einer linken Seitenfläche 36 begrenzt, wobei von der oberen Längsfläche 34 und von der rechten Seitenfläche 35 in Figur 3 nur jeweils eine Vorderkante zu sehen ist.

Nach vorne hin wird das Steckergehäuse 31 von einer Kontaktfläche 37 begrenzt, und auf der Rückseite des Steckergehäuses 31 ist eine Anschlußfläche vorgesehen, von der in Figur 3 nur eine Oberkante und eine linke Seitenkante zu sehen ist.

Auf der Oberseite des Steckergehäuses 31 ist in der oberen Längsfläche 34 ein Aufnahmebereich 38 ausgebildet, der zwölf parallel zur Einsteckrichtung 32 verlaufende V-Nuten 39 aufweiset. Die V-Nuten 39 sind zur Aufnahme von in dieser Ansicht nicht gezeigten Lichtwellenleitern einer optischen Mehrfachfaser bestimmt. Der Aufnahmebereich 38 schließt bundigt mit der Kontaktfläche 37 ab. Auf der anderen Seite des Steckergehäuses 31 schließt der Aufnahmebereich 38 mit der Anschlußfläche ab.

Weiterhin sind im Steckergehäuse 31 in einem Bereich links und rechts des Aufnahmebereichs 38 jeweils eine Führungsbohrung 40 vorgesehen, die sich parallel zur Einsteckrichtung 32 durch das gesamte Steckergehäuse 31 hindurch erstrecken können und die auf der Kontaktfläche 37 und auf der Anschlußfläche austreten können. In den Führungsbohrungen 40 sind in dieser Ansicht nicht gezeigte Führungsstifte vorgesehen, die vom Steckergehäuse 31 aus über die Kontaktfläche 37 abstehen.

Am äußeren Umfang im Bereich je einer imaginären Verbindungskante zwischen der oberen Längsfläche 34, der rechten Seitenfläche 35, der linken Seitenfläche 36 und der unteren Längsfläche 33 weist das Steckergehäuse 31 Führungs- und Kodierfasen 41 auf.

Weiterhin ist in der unteren Längsfläche 33 ein quaderförmiger Fließsperren-Einschnitt 42 vorgesehen, der sich als Einschnitt ausgehend von der unteren Längsfläche 33 in Richtung auf die obere Längsfläche 34 hin erstreckt, und zwar nahezu bis zur Mitte des Steckergehäuses 31 zwischen der unteren Längsfläche 33 und der oberen Längsfläche 34. Der Fließsperren-Einschnitt 42 verläuft parallel zur Einsteckrichtung 32.

Der bevorzugte Bereich in der unteren Längsfläche 33, innerhalb dessen der Fließsperren-Einschnitt 42 im Steckergehäuse 31 eingebracht ist, ist in Figur 4 mit "x" bezeichnet. Er erstreckt sich von dem in Fließrichtung bei der Herstellung des Steckergehäuses 31 stromabwärts gerichteten Ende des Aufnahmebereichs 38 bis nahezu an die linke Seitenfläche 36. Bei bestimmten Ausbildungen kann der Fließsperren-Einschnitt 42 auch in einem Bereich unterhalb des Aufnahmebereichs 38 vorgesehen sein.

Das Steckergehäuse 31 in Figur 3 und in Figur 4 ist in einem Zustand dargestellt, der sich unmittelbar nach dem Ausformen aus einer in dieser Ansicht nicht gezeigten Spritzgießform ergibt. Dementsprechend ist am Steckergehäuse 31 noch ein Strangbereich 43 vorgesehen, der sich in einen Angußkanalbereich 44 und in einen Angußfächerbereich 45 gliedert. Dabei ist am Steckergehäuse 31 ein Gußmassen-Eintrittsbereich 46 vorgesehen, der am besten in Figur 4 zu sehen ist. Im Bereich des Gußmassen-Eintrittsbereichs 46 weist der Angußfächerbereich 45 in Einsteckrichtung dieselbe Breite auf, wie die rechte Seitenfläche 35. In der Höhe beansprucht der Gußmassen-Eintrittsbereich 46 nur einen Teilbereich der rechten Seitenfläche 35.

Wie am besten in Figur 4 zu sehen ist, beinhaltet das Steckergehäuse 31 linienförmige Füllstoffe und Verstärkungsfasern 47, deren Längserstreckung in Figur 4 durch kurze Striche angedeutet ist. Die Längserstreckung der Verstärkungsfasern 47 entspricht dabei häufig der lokalen Strömungsrichtung der zur Herstellung des Steckergehäuses 31 verwendeten Kunststoffmasse kurz vor dem Erstarren.

Wie man in Figur 4 am besten sieht, liegt unterhalb des Aufnahmebereichs 38 ein Zustand vor, in dem die Längsorientierung der Verstärkungsfasern 47 parallel zu einer Verbindungslinie zwischen den Führungsbohrungen 40 verläuft. Eine Verbindungslinie der V-Nuten 39 verläuft in diesem Bereich ebenfalls parallel zu den Verstärkungsfasern 47. Die Längserstreckung der Verstärkungsfasern 47 in diesem Bereich verläuft ebenso parallel zu einer Verbindungslinie zwischen dem Gußmassen-Eintrittsbereich 46 und einer Oberkante des Fließsperren-Einschnitts 42.

Durch diese Orientierung der Verstärkungsfasern 47 in dem Steckergehäuse 31 werden besonders günstige thermische Eigenschaften des Steckergehäuses 31 bereitgestellt. Daruber hinaus existieren Kunststoff-Makromoleküle, deren Längserstrekkung parallel zu den Verstärkungsfasern 47 unterhalb des Aufnahmebereichs 38 verläuft.

Bei der Herstellung und Fertigstellung einer Ferrule 30 wird dabei wie folgt vorgegangen.

In einem ersten Herstellungsschritt wird das Steckergehäuse 31 unter Einsatz einer Spritzgußtechnik hergestellt. Hierzu ist eine Spritzgußform vorgesehen, in der im Bereich des Gußmassen-Eintrittsbereichs 46 eine Eintrittsöffnung sowie ein Kanal für den Angußfächerbereich 45 vorgesehen sind. Im Bereich des Fließsperren-Einschnitts 42 ist in der Spritzgrußform eine leistenförmige Erhebung vorgesehen und die Führungsbohrungen 40 werden durch in die Spritzgußform eingesetzte Kerne bereitgestellt. Danach wird die Spritzgußform mit thermoplastischer Gußmasse aufgefüllt, der Füllstoffe und Verstärkungsfasern 47 beigemengt sind. Es wird ein Filmanguß über die gesamte Länge des Steckergehäuses 31 vorgenommen. Durch den geringen Angußquerschnitt im Gußmassen-Eintrittsbereich und durch die mittige Anordnung des Gußmassen-Eintrittsbereichs strömt die Kunststoffmassenschmelze mit einer zu den Seitenflächen 35, 36 parallelen Front in die Gußform ein. Danach wird die Kunststoffschmelze geschert und es bildet sich ein Freistrahl aus. Durch diese Maßnahme orientieren sich die in die Gußform einströmende Kunststoffschmelze und die darin enthaltenen Verstärkungsfasern und Kunststoff-Makromoleküle schon beim Einspritzen parallel zur Verbindungslinie der V-Nuten 39 untereinander bzw. zur Verbindungslinie der Führungsbohrungen 40. Um die Orienterung der Verstärkungsfasern und der Kunststoff-Makromoleküle unterhalb des Aufnahmebereichs 38 zu verbessern, wird die Kunststoffschmelze bis kurz vor dem vollständigen Vernetzen in Strömungsrichtung des Einspritzvorgangs bewegt. Besonders vorteilhafte Steckergehäuse 31 ergeben sich dann, wenn die Position "x" des Fließsperren-Einschnitts 42 so gewählt wird, daß das Volumen in der Spritzgußform in Strömungsrichtung hinter dem Fließsperren-Einschnitt 42 wenigstens gleich dem Volumen desjenigen Bereichs des Steckergehäuses 31 ist, der sich zwischen dem Aufnahmebereich 38 und der unteren Längsfläche 33 befindet.

Sofern die in die Spritzgußform eingepreßte Kunststoffmasse beim vollständigen Vernetzen schwindet, wird durch den Angußfächerbereich 45 Kunststoffmasse in die Spritzgußform nachgepreßt.

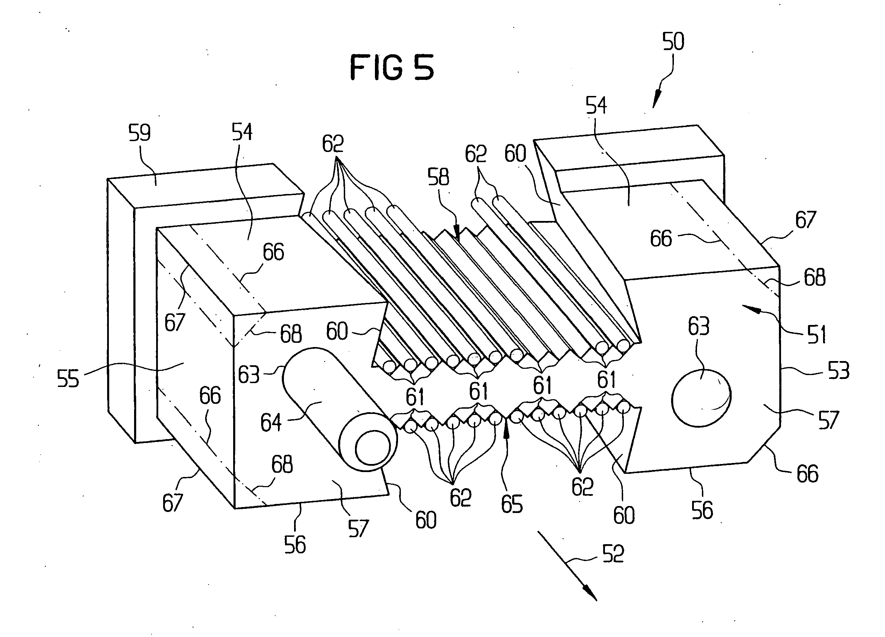

Figur 5 zeigt eine weitere Ferrule 50 in einer perspektivischen Darstellung, wobei in dieser Ansicht nur ein Steckergehäuse 51 zu sehen ist.

Die Ferrule 50 wird entlang einer Einsteckrichtung 52 in ein optisches Modul eingesteckt, das in dieser Ansicht nicht gezeigt ist.

Das Steckergehäuse 51 hat in einem Querschnitt senkrecht zur Einsteckrichtung 52 eine im wesentlichen rechteckige Außenform. Der äußere Umriß des Steckergehäuses 51 wird von einer rechten Seitenfläche 53, von einer oberen Längsfläche 54, von einer linken Seitenfläche 55 und von einer unteren Längsfläche 56 begrenzt, wobei in Figur 5 von der rechten Seitenfläche 53 und von der unteren Längsfläche 56 jeweils nur eine Vorderkante zu sehen ist. Nach vorne hin wird das Steckergehäuse 51 von einer Anschlußfläche 57 begrenzt, während am hinteren Ende des Steckergehäuses 51 eine in dieser Ansicht nicht zu sehende Kontaktfläche vorgesehen ist, von der in Figur 5 nur eine obere Kante und eine Seitenkante gezeigt ist.

Auf der Kontaktseite ist ein um die Seiten- und Längsflächen des Steckergehäuses 51 herum verlaufender ringförmiger Anschlagsteg 59 ausgebildet, der ebenfalls einen quaderförmigen Umriß aufweist.

Auf der Oberseite des Steckergehäuses 51 ist ein oberer Aufnahmebereich 58 als Einschnitt in die obere Längsfläche 54 und in den oberen Bereich des Anschlagstegs 59 ausgebildet. Der obere Aufnahmebereich 58 hat nach oben zur oberen Längsfläche 54 hin sich schwalbenschwanzförmig verengende Seitenwände 60. Im oberen Aufnahmebereich 58 sind weiterhin parallel zur Einsteckrichtung 52 verlaufende V-Nuten 61 ausgeformt, in die Lichtwellenleiter 62 einer in der Ferrule 50 vorgesehenen Mehrfachfaser eingelegt werden. Der obere Aufnahmebereich 58 schließt dabei bündig mit der Anschlußfläche 57 ab.

Schließlich sind im Steckergehäuse 51 noch Führungsbohrungen 63 vorgesehen, die sich parallel zur Einsteckrichtung 52 erstrecken. In der in Figur 5 auf der linken Seite gezeigten Führungsbohrung 63 ist ein Führungsstift 64 so eingesteckt, daß er von der Anschlußfläche 57 absteht. Die Führungsbohrungen 63 sind bezüglich einer durch die rechte Seitenfläche 53 und durch die linke Seitenfläche 55 verlaufende Symmetrieebene gegeneinander versetzt angeordnet. Dabei ist die in Figur 5 auf der linken Seite gezeigte Führungsbohrung 63 höher angeordnet als die in Figur 5 auf der rechten Seite gezeigte Führungsbohrung 63.

Auf der Unterseite des Steckergehäuses 51 ist ein unterer Aufnahmebereich 65 vorgesehen, der als Einschnitt in die untere Längsfläche 56 und in den unteren Bereich des Anschlagstegs 59 ausgebildet ist. Bezüglich einer Symmetrieebene des Steckergehäuses 51 durch die obere Längsfläche 54 und durch die untere Längsfläche 56 sind der untere Aufnahmebereich 65 und der obere Aufnahmebereich 58 zueinander symmetrisch angeordnet. Im Übrigen stimmen der obere Aufnahmebereich 58 und der untere Aufnahmebereich 65 identisch überein, gleichen Teilen sind gleiche Bezugsziffern gegeben.

Das Steckergehäuse 51 weist Kodierungselemente auf, die im Bereich imaginärer Verbindungskanten von der oberen Längsfläche 54, der rechten Seitenfläche 53, der linken Seitenfläche 55 und der unteren Längsfläche 56 untereinander durch Führungsflächen 66 gebildet sind, die als Anfasungen ausgeformt sind, deren Erstreckung parallel zur Einsteckrichtung 52 verläuft. An je einer Verbindungskante 67 zwischen der linken Seitenfläche 55 und der oberen Längsfläche 54 bzw. zwischen der oberen Längsfläche 54 und der rechten Seitenfläche 53 bzw. zwischen der linken Seitenfläche 55 und der unteren Längsfläche 56 ist eine Kodierungskante 68 ausgebildet, die in Figur 5 durch eine Strichlinie dargestellt gegenüber dem restlichen Steckergehäuse 51 abgegrenzt ist.

Aufgrund der besonderen Ausbildung des Steckergehäuses 51 mit den Führungsflächen 66 und der Kodierungskante 68 ist gewährleistet, daß die Ferrule 50 nur in ein dazu komplementäres Gegenteil eingesteckt werden kann, dessen innerer Umriß mit dem äußeren Umriß des Steckergehäuses 51 übereinstimmt. Dabei können unterschiedliche Kodierungen hergestellt werden, wenn Verbindungskanten zwischen den äußeren Umfangsflächen des Steckergehäuses 51 in unterschiedlicher Kombination mit Kodierungskanten und Führungsflächen versehen werden.

Die Kodierung kann auch mittels der Führungsstifte 64 erfolgen, und zwar über deren Durchmesser und ihre Anordnung bzw. ihre Position in der Anschlußfläche 57. So kann durch asymmetrische Anordnung der Führungsstifte 64 und/oder durch deren unterschiedliche Durchmesser verhindert werden, daß die Ferrule um 180° verdreht in das optische Modul eingesteckt wird. Zur Herstellung des Steckergehäuses 51 aus thermoplastischem Kunststoff mit Verstärkungsfasern wird entsprechend zur Herstellung des Steckergehäuses 2 aus Figur 1 vorgegangen. Mit dem. Herstellungsverfahren läßt sich eine Ferrule bereitstellen, die eine hohe Informationsdichte bei der Übertragung erlaubt.

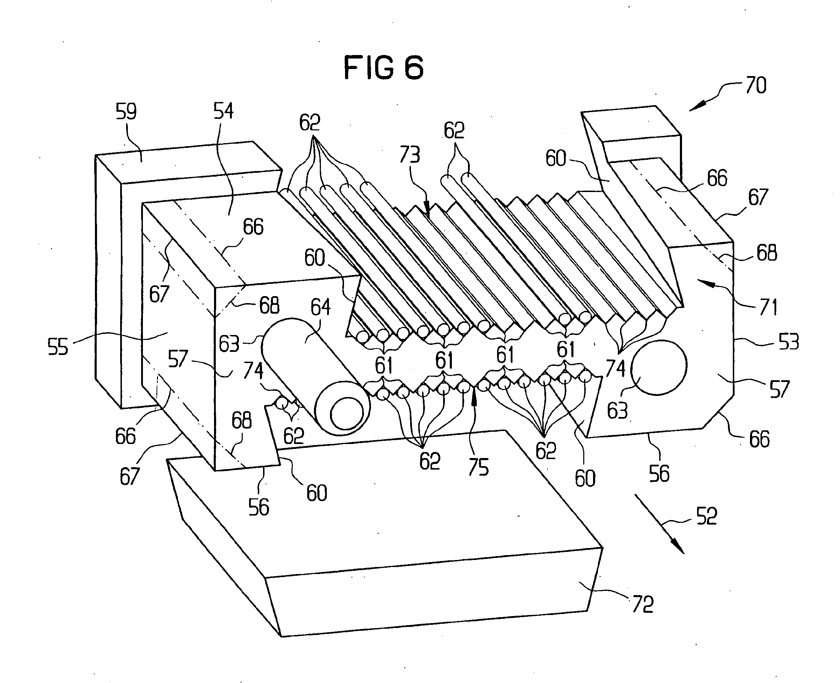

Figur 6 zeigt eine Ferrule 70 in einer perspektivischen Darstellung, von der in dieser Ansicht nur ein Steckergehause 71 zu sehen ist, das untenseitig durch einen Schwalbenschwanzdeckel 72 verschlossen wird.

Das Steckergehäuse 71 entspricht in den wesentlichen Teilen dem Steckergehäuse 51 aus Figur 5. Gleichen Teilen sind daher gleiche Bezugsziffern gegeben.

Das Steckergehäuse 71 unterscheidet sich vom Steckergehäuse 51 dadurch, daß auf seiner Oberseite ein oberer Aufnahmebereich 73 vorgesehen ist, der gegenüber dem oberen Aufnahmebereich 58 aus Figur 5 zusätzliche V-Nuten 74 aufweist. Außerdem ist ein unterer Bereich 75 vorgesehen, der gegenüber dem unteren Aufnahmebereich 65 aus Figur 5 zusätzliche V-Nuten 74 aufweist, von denen in dieser Ansicht nur eine einzige zusätzliche V-Nut 74 zu sehen ist.

Im Ergebnis ergibt sich, daß der obere Aufnahmebereich 73 und der untere Aufnahmebereich 75 gegenüber einer senkrechten Längssymmetrieebene in Richtung der Einsteckrichtung 52 durch das Steckergehäuse 71 zueinander versetzt angeordnet sind. Dadurch.ergibt sich eine größere Anzahl von V-Nuten 61, 74, so daß die Informationsdichte, die mit einer Ferrule 70 übertragbar ist, gegenüber den herkömmlichen Ferrulen erhöht ist.

Der Schwalbenschwanzdeckel 72 dient zum Verschließen des oberen Aufnahmebereichs 73 bzw. des unteren Aufnahmebereichs 75.

Das Steckergehäuse 71 ist mit einem Verfahren hergestellt, das dem Verfahren entspricht, mit dem das Steckergehäuse 2 aus Figur 1 hergestellt ist. Dieses Verfahren wird auch als Verfahren mit einer "verlorenen Form" bezeichnet und ist besonders für thermoplastische Werkstoffe geeignet, die Verstärkungsfasern aufweisen.

## Patentansprüche

1. Ferrule, insbesondere zur Verwendung in einer Steckverbindung für wenigstens zwei miteinander zu verbindende optische Mehrfachfaser, die jeweils mindestens zwei Lichtwellenleiter (62) aufweisen,
mit einem aus thermoplastischem Kunststoff hergestellten Steckergehäuse (71), das in einer Einsteckrichtung (52) in einen Ferrulencontainer einsteckbar ist und/oder das mit einem weiteren Steckergehäuse zusammensteckbar ist,
wobei das Steckergehäuse (71) einen oberen und einen unteren Aufnahmebereich (73, 75) mit jeweils mehreren gleichen, in einer Ebene parallel zur Steckrichtung angeordneten Lichtwellenleiternuten jeweils gleicher Anzahl und gleichen Abstandes zur Aufnahme je eines Mehrfach-Lichtwellenleiters aufweist, wobei jeder der Aufnahmebereiche mit einem Deckel (72) verschließbar ist, wobei zwei Führungsmittel (63) vorgesehen sind, die jeweils einem Aufnahmebereich zugeordnet sind, wobei die Mitte des jeweiligen Führungsmittel in der zugeordneten Ebene der Lichtwellenleiternuten an jeweils entgegengesetzten Enden der Aufnahmebereiche angeordnet sind,
**dadurch gekennzeichnet, dass**
der obere Aufnahmebereich (73) und der untere Aufnahmebereich (75) in einer Richtung senkrecht zur Steckrichtung und parallel zu den Ebenen zueinander versetzt angeordnet sind, die Führungsmittel als Führungsbohrungen in Steckrichtung ausgebildet sind, wobei die Führungsbohrungen jeweils, in einer Richtung senkrecht zur Ebene der Lichtwellenleiternuten gesehen, über dem unteren bzw. unter dem oberen Aufnahmebereich angeordnet sind.

2. Ferrule nach Anspruch 1 , **dadurch gekennzeichnet, dass** die Aufnahmebereiche eine Schwalbenschwanzführung (60) zur Fixierung des Deckels (72) aufweisen.

3. Ferrule nach einem der vorhergehenden Ansprüche, **dadurch gekennzeichnet, dass** das Steckergehäuse (71) aus thermoplastischem Kunststoff gefertigt ist, dem Füllstoffpartikel (19) beigemengt sind, wobei zumindest in einer Umgebung des Aufnahmebereichs (73,75) längliche Füllstoffpartikel (19) so angeordnet sind, dass ihre Längserstreckungsrichtung wenigstens teilweise quer oder parallel zur Einsteckrichtung verläuft.

4. Ferrule nach Anspruch 3 **dadurch gekennzeichnet, dass** das Steckergehäuse (71) an wenigstens einer Seite einen sich vorzugsweise über deren ganze Breite erstreckenden Gussmassen-Eintrittsbereich (17) aufweist, wobei an wenigstens einer dem Gussmassen-Eintrittsbereich (17) gegenüberliegenden Seite des Steckergehäuses (71) ein sich vorzugsweise über deren ganze Breite erstreckender Gussmassen-Austrittsbereich (18) vorgesehen ist, wobei eine Verbindungslinie zwischen Gussmassen-Eintrittsbereich (17) und Gussmassen-Austrittsbereich (18) parallel zur Erstreckungsrichtung von in einer Umgebung des Aufnahmebereichs (7) vorgesehenen länglichen Füllstoffpartikeln (19) verläuft.

5. Ferrule nach einem der vorhergehenden Ansprüche, **dadurch gekennzeichnet, dass** der thermoplastische Kunststoff wenigstens ein teilkristallines Thermoplast aufweist.

6. Ferrule nach Anspruch 5 **dadurch gekennzeichnet, dass** der thermoplastische Kunststoff LCP, PPS und/oder PEEK aufweist.

7. Ferrule nach einem der vorhergehenden Ansprüche, **dadurch gekennzeichnet, dass** wenigstens ein als Verstärkungsstoff ausgebildeter Füllstoff vorgesehen ist.

8. Ferrule nach Anspruch 7, **dadurch gekennzeichnet, dass** der Verstärkungsstoff Glas-, Kohle-, Aramid- und/oder Stahlfasern aufweist.

9. Ferrule nach Anspruch 7 oder Anspruch 8, **dadurch gekennzeichnet, dass** Fasern des Verstärkungsstoffs bei einem Durchmesser von ca. 10 µm bis ca. 20µm eine Länge von ca. 300µm aufweisen.

10. Ferrule nach einem der vorhergehenden Ansprüche, **dadurch gekennzeichnet, dass** als sphärische Mineralfüllstoffe ausgebildete Füllstoffe vorgesehen sind.

## Claims

1. A ferrule, in particular for use in a plug-in connection for at least two optical multifibre cables to be connected together, which in each case comprise at least two optical fibres (62), said ferrule having a connector housing (71) made from thermoplastic, which may be inserted in one insertion direction (52) into a ferrule container and/or which may be connected together with a further connector housing, the connector housing (71) comprising an upper and a lower receiving area (73, 75), each for accommodating one multiple optical fibre, with in each case a plurality of identical optical fibre grooves arranged in a plane parallel to the insertion direction in each case in identical numbers and with identical spacing, each of the receiving areas being closable with a cover (72), two guide means (63) being provided, which are in each case associated with one receiving area, the middle of the respective guide means being arranged in the associated plane of the optical fibre grooves at in each case opposing ends of the receiving areas, **characterised in that** the upper receiving area (73) and the lower receiving area (75) are arranged offset relative to one another in a direction perpendicular to the insertion direction and parallel to the planes, and the guide means take the form of guide bores in the insertion direction, the guide bores each being arranged, when viewed in a direction perpendicular to the plane of the optical fibre grooves, above the lower or below the upper receiving area.

2. A ferrule according to claim 1, **characterised in that** the receiving areas comprise a dovetail guide (60) for fixing the cover (72).

3. A ferrule according to any one of the preceding claims, **characterised in that** the connector housing (71) is made of thermoplastic, with which filler particles (19) are admixed, elongate filler particles (19) being arranged at least in an area surrounding the receiving area (73, 75) in such a way that their direction of longitudinal extension extends at least partially transversely of or parallel to the insertion direction.

4. A ferrule according to claim 3, **characterised in that** the connector housing (71) comprises a casting compound inlet area (17) extending on at least one side preferably over the entire width thereof, a casting compound outlet area (18) being provided on at least one side of the connector housing (71) opposite from the casting compound inlet area (17) and extending preferably over the entire width thereof, a connecting line between casting compound inlet area (17) and casting compound outlet area (18) extending parallel to the direction of extension of elongate filler particles (19) provided in an area surrounding the receiving area (7).

5. A ferrule according to any one of the preceding claims, **characterised in that** the thermoplastic comprises at least one partially crystalline thermoplastic.

6. A ferrule according to claim 5, **characterised in that** the thermoplastic comprises LCP, PPS and/or PEEK.

7. A ferrule according to any one of the preceding claims, **characterised in that** at least one filler is provided in the form of a reinforcing material.

8. A ferrule according to claim 7, **characterised in that** the reinforcing material comprises glass, carbon, aramid and/or steel fibres.

9. A ferrule according to claim 7 or claim 8, **characterised in that** fibres of the reinforcing material have a length of approx. 300 µm with a diameter of approx. 10 µm to approx. 20 µm.

10. A ferrule according to any one of the preceding claims, **characterised in that** fillers are provided in the form of spherical mineral fillers.

## Revendications

1. Férule, notamment destinée à être utilisée dans un raccord enfichable pour au moins deux fibres optiques multiples devant être raccordées l'une à l'autre qui comprennent chacune au moins deux guides d'onde lumineuse (62),
comprenant un boîtier de connecteur (71) fabriqué dans une matière thermoplastique qui peut être inséré dans un conteneur de férules dans une direction d'insertion (52) et/ou qui peut être assemblé par emboîtement avec un autre boîtier de connecteur, le boîtier de connecteur (71) comprenant une zone de réception supérieure et une zone de réception inférieure (73, 75) comportant respectivement plusieurs rainures de guides d'onde lumineuse identiques disposées dans un plan parallèle à la direction d'insertion, à chaque fois en nombre égal et avec le même écartement, et destinées à recevoir chacune un guide d'onde lumineuse multiple, chacune des zones de réception pouvant être fermée par un couvercle (72), deux moyens de guidage (63) qui sont associés chacun à une zone de réception étant prévus, le centre du moyen de guidage respectif étant situé dans le plan associé des rainures de guides d'onde lumineuse à des extrémités des zones de réception respectivement opposées,
**caractérisée par le fait que**
la zone de réception supérieure (73) et la zone de réception inférieure (75) sont arrangées en décalage l'une par rapport à l'autre dans une direction perpendiculaire à la direction d'insertion et parallèle aux plans, les moyens de guidage sont formés comme des alésages de guidage dans la direction d'insertion, les alésages de guidage étant situés respectivement au-dessus de la zone de réception inférieure resp. au-dessous de la zone de réception supérieure si l'on considère une direction perpendiculaire au plan des rainures de guides d'onde lumineuse.

2. Férule selon la revendication 1, **caractérisée par le fait que** les zones de réception comportent une glissière de guidage en queue d'aronde (60) pour fixer le couvercle (72).

3. Férule selon l'une des revendications précédentes, **caractérisée par le fait que** le boîtier de connecteur (71) est fabriqué dans une matière thermoplastique à laquelle sont ajoutées des particules de matière de remplissage (19), des particules de matière de remplissage (19) allongées étant disposées au moins dans un voisinage de la zone de réception (73, 75) de manière à ce que leur direction d'étendue longitudinale soit au moins partiellement perpendiculaire ou parallèle à la direction d'insertion.

4. Férule selon la revendication 3, **caractérisée par le fait que** le boîtier de connecteur (71) est pourvu, sur au moins un côté, d'une zone d'entrée de masse de coulage (17) s'étendant de préférence sur toute sa largeur, une zone de sortie de masse de coulage (18) s'étendant de préférence sur toute la largeur du boîtier de connecteur (71) étant prévue sur au moins un côté de celui-ci opposé à la zone d'entrée de masse de coulage (17), une ligne de liaison entre la zone d'entrée de masse de coulage (17) et la zone de sortie de masse de coulage (18) s'étendant parallèlement à la direction d'étendue de particules de matière de remplissage allongées (19) prévues dans un voisinage de la zone de réception (7).

5. Férule selon l'une des revendications précédentes, **caractérisée par le fait que** la matière thermoplastique comprend au moins un thermoplastique partiellement cristallin.

6. Férule selon la revendication 5, **caractérisée par le fait que** la matière thermoplastique comprend un LCP, du PPS et/ou du PEEK.

7. Férule selon l'une des revendications précédentes, **caractérisée par le fait qu'**au moins une matière de remplissage est prévue en tant que matière de renfort.

8. Férule selon la revendication 7, **caractérisée par le fait que** la matière de renfort comprend des fibres de verre, de carbone, d'aramide et/ou d'acier.

9. Férule selon la revendication 7 ou la revendication 8, **caractérisée par le fait que** les fibres de la matière de renfort ont une longueur d'environ 300 µm avec un diamètre compris entre environ 10 µm et environ 20 µm.

10. Férule selon l'une des revendications précédentes, **caractérisée par le fait que** des matières de remplissage sont prévues en tant que matières de remplissage minérales sphériques.
